# EUROPÄISCHE PATENTANMELDUNG

(11) **EP 4 653 234 A1**
(43) Veröffentlichungstag der Anmeldung: **26.11.2025**
(21) Anmeldenummer: 25163250.1
(22) Anmeldetag: 12.03.2025
(51) Int. Cl.: B60L 3/00, B60L 5/02, B60L 5/08, B60L 5/12, B60L 5/19, B60L 5/36, B60L 9/04, B08B 13/00

(54) **STROMABNEHMER SOWIE STRASSENFAHRZEUG MIT EINEM SOLCHEN STROMABNEHMER**

(30) Priorität: 21.05.2024 DE 102024204679
(71) Anmelder: Siemens Mobility GmbH, 80997 München (DE)
(72) Erfinder: Blase, Bastian, 13156 Berlin (DE)
(74) Vertreter: Siemens Patent Attorneys

(57) **Zusammenfassung**

Die Erfindung betrifft einen Stromabnehmer (2) für ein Straßenfahrzeug (1) zur Einspeisung von Traktionsenergie aus Fahrdrähten (5) einer elektrischen Oberleitungsanlage (3). Er umfasst ein gelenkiges Traggestänge (8), welches über ein Basisgelenk (15) drehbar auf dem Straßenfahrzeug (1) abstützbar ist und welches zwei über je ein Wippengelenk (22) drehbar gelagerte Kontaktwippen (12, 13) trägt. Jede der Kontaktwippen (12, 13) weist jeweils zwei Schleifleisten (14) auf, welche sich auf dem jeweiligen Wippengelenk (22) über Blattfedern (23) federelastisch abstützen. Eine Hubeinrichtung (17) dient dem Aufstellen des Traggestänges (8) aus einer Ruheposition, in der die Kontaktwippen (12, 13) fahrzeugnah abgesenkt sind, in eine Betriebsposition, in der die Kontaktwippen (12, 13) zur elektrischen Kontaktherstellung zwischen den Schleifleisten (14) und den Fahrdrähten (5) angehoben sind. Die Blattfedern (23) sind zur Potenzialtrennung zwischen einem Oberleitungspotenzial, auf dem die Schleifleisten (14) bei elektrischer Kontaktierung der Fahrdrähte (5) liegen, und einem Fahrzeugpotenzial, auf dem das Traggestänge (8) liegt, elektrisch isolierend ausgebildet. Erfindungsgemäß weist eine Blattfeder (23) einen schwingungsfähigen Isolationskörper (32) mit einer elastisch verformbaren Körperwand (33) auf, welche aufrecht auf der Blattfeder (23) und quer zu einer Längsrichtung (L) der Blattfeder (23) steht. Dabei ist die Körperwand (33) über mindestens zwei Fixierungsstellen (34) derart mit der wenigstens einen Blattfeder (23) gekoppelt, dass eine Federbewegung (F) der Blattfeder (23) eine flexurale Schwingungsbewegung (S) der Körperwand (33) erzwingt. Hierdurch wird die Verfügbarkeit des Stromabnehmers (2) für die Einspeisung von Traktionsenergie auch bei winterlichen Straßenverhältnissen erhöht.

## Beschreibung

Die Erfindung betrifft einen Stromabnehmer für ein Straßenfahrzeug nach dem Oberbegriff des Patentanspruches 1.

Aus der Offenlegungsschrift DE 10 2021 208 951 A1 ist ein derartiger Stromabnehmer für ein elektrisch oder hybridelektrisch angetriebenes Straßenfahrzeug bekannt, der zur Ein-speisung von Traktionsenergie aus einer zweipoligen elektrischen Oberleitungsanlage vorgesehen ist. Dieser Stromabnehmer umfasst einen Hauptrahmen, der sich auf einem Chassis, also dem Fahrgestell des Straßenfahrzeugs, abstützt und auf dem ein Traggestänge mit einem Unterarm und einem Oberarm lagert. Der Unterarm ist über ein Basis-gelenk drehbar mit dem Hauptrahmen und über ein Armgelenk drehbar mit dem Oberarm verbunden. Das Traggestänge trägt fahrdrahtseitig zwei nebeneinander angeordnete Kontaktwippen, die über jeweils ein Wippengelenk drehbar mit dem Oberarm verbunden sind und die jeweils zwei Schleifleisten aufweisen, welche sich auf dem jeweiligen Wippengelenk über Blattfedern federelastisch abstützen. Das Traggestänge ist mittels einer Hubeinrichtung pantographenartig auf- und abbewegbar, so dass zwischen den Schleifleisten und den Fahrdrähten der Oberleitungsanlage ein elektrischer Kontakt herstell- und wieder lös-bar ist. Dabei sind die Blattfedern elektrisch isolierend zur Potenzialtrennung zwischen einem elektrischen Oberleitungspotenzial, auf dem die Schleifleisten bei elektrischer Kontaktierung der Fahrdrähte liegen, und einem elektrischen Fahrzeugpotenzial, auf dem das Traggestänge liegt, ausgebildet. Das Fahrzeugpotenzial kann ein Zwischenpotenzial sein, welches gegenüber einem Chassispotenzial, auf dem ein Fahrgestell des Straßenfahr-zeugs liegt, elektrisch isoliert ist.

Die elektrische Isolation zwischen Oberleitungspotenzial und Zwischenpotenzial wird vom Stromabnehmer ebenso überwacht, wie die elektrische Isolation zwischen Zwischenpotenzial und Chassispotenzial. Sollte eine der elektrischen Isolationen eine Störung aufweisen, wird durch Absenken des Traggestänges der elektrische Kontakt zwischen Schleifleisten und Fahrdrähten unterbrochen, bevor das Oberleitungspotenzial am Chassis bzw. Fahrgestell des Straßenfahrzeugs anliegen kann und es so zu einer elektrischen Gefährdung von Personen kommen könnte.

Es hat sich gezeigt, dass es im winterlichen Straßenbetrieb eines eingangs beschriebenen Stromabnehmers zu Unterschreitungen eines kritischen Isolationswiderstandes kommen kann, ohne erkennbare Beschädigung der elektrischen Isolatoren oder der aufgrund ihrer Materialeigenschaften selbst als Isolator wirkenden Blattfedern, was zu einem unerwünschten Abdrahten des Stromabnehmers durch Absenken des Traggestänges und damit einhergehend zu einer Unterbrechung der Energieeinspeisung aus der Oberleitungsanlage führt. Mit vorliegender Erfindung wurde erkannt, dass die kritische Unterschreitung des Isolationswiderstandes durch elektrisch leitfähige Beläge auf der Oberfläche der Blattfedern hervorgerufen werden kann. Solche Beläge können sich in salzhaltiger feuchter Umgebung bilden, wie sie etwa durch die von Fahrzeugen aufgewirbelte Gischt auf mit Streusalz versehenen nassen Straßen entsteht.

Der Erfindung liegt daher die Aufgabe zugrunde, einen Stromabnehmer der eingangs genannten Art mit erhöhter Verfügbarkeit für die Einspeisung von Traktionsenergie auch bei winterlichen Straßenverhältnissen bereitzustellen.

Die Aufgabe wird gemäß der vorliegenden Erfindung gelöst durch einen gattungsgemäßen Stromabnehmer mit den im kennzeichnenden Teil des Patentanspruches 1 angegebenen Merkmalen.

Die Erfindung geht aus von einem Stromabnehmer für ein elektrisch oder hybridelektrisch angetriebenes Straßenfahrzeug, beispielsweise ein schweres Nutzfahrzeug, wie etwa eine Sattelzugmaschine. Der Stromabnehmer ist zur Einspeisung von elektrischer Traktionsenergie aus Fahrdrähten einer streckenseitig angeordneten, zweipoligen elektrischen Oberleitungsanlage vorgesehen, um einen elektrischen oder hybridelektrischen Traktionsantrieb des Straßenfahrzeugs während der Fahrt mit Energie zu versorgen. Der Stromab-nehmer umfasst ein gelenkiges Traggestänge, welches fahrzeugseitig über ein Basisgelenk drehbar auf dem Straßenfahrzeug abstützbar ist und welches fahrdrahtseitig zwei über je ein Wippengelenk drehbar gelagerte Kontaktwippen trägt. Das Traggestänge kann einen Unterarm und zwei Oberarme aufweisen, die über Zug- und Koppelstangen nach Art eines Pantographen aufstellbar und zusammenlegbar sind. Jede der Kontaktwippen weist jeweils zwei sich parallel zu einer Drehachse des jeweiligen Wippengelenks erstreckende Schleifleisten auf. Eine Schleifleiste kann ein längliches Schleifstück aus Graphit aufweisen, welches in einem Schleifstückhalter befestigt ist. An seitlichen Enden der Schleifleiste können nach unten gebogene Auflaufhörner angeordnet sein. Jede der Schleifleisten stützt sich auf dem jeweiligen Wippengelenk über Blattfedern federelastisch ab. Der Stromabnehmer umfasst eine Hubeinrichtung zum Aufstellen des Traggestänges aus einer unteren Ruheposition, in der die Kontaktwippen fahrzeugnah abgesenkt sind, in eine obere Betriebsposition, in der die Kontaktwippen zur elektrischen Kontaktherstellung zwischen Schleifleisten und Fahrdrähten angehoben sind. Die Blattfedern sind elektrisch isolierend zur Potenzialtrennung zwischen einem elektrischen Oberleitungspotenzial, auf dem die Schleifleisten bei elektrischer Kontaktierung der Fahrdrähte liegen, und einem elektrischen Fahrzeugpotenzial, auf dem das Traggestänge liegt, ausgebildet. Das Fahrzeugpotenzial kann direkt das Chassispotenzial, auf dem ein Fahrgestell des Straßenfahrzeugs liegt, oder auch ein Zwischenpotenzial sein, welches als zusätzliche elektrische Potenzial-schicht zwischen Oberleitungspotenzial und Chassispotenzial vorgesehen und gegen die-se isoliert ist. Die Blattfedern können aus einem biegeelastischen hochohmigen Faser-Kunststoff-Verbund bestehen, beispielsweise aus glasfaserverstärktem Kunststoff, weisen ein geringes Gewicht auf und sind komplett oder zumindest abschnittsweise elektrisch isolierend.

Erfindungsgemäß weist wenigstens eine der Blattfedern, vorzugsweise alle Blattfedern, einen oder mehrere schwingungsfähige Isolationskörper mit einer elastisch verformbaren Körperwand auf. Die Körperwand steht aufrecht auf einer Oberfläche der wenigstens einen Blattfeder und quer zu einer Längsrichtung der wenigstens einen Blattfeder. Dabei weist die Längsrichtung von einer ersten Befestigungsstelle der wenigstens einen Blattfeder, an der sie mit einer Schleifleiste verbunden ist, zu einer zweiten Befestigungsstelle der wenigstens einen Blattfeder, an der sie mit einem Wippengelenk verbunden ist. Die Körperwand ist dabei über mindestens zwei Fixierungsstellen derart mit der wenigstens einen Blattfeder gekoppelt, dass eine Federbewegung der Blattfeder eine flexurale Schwingungsbewegung der Körperwand erzwingt. Die Anordnung der Isolationskörper zwischen erster und zweiter Befestigungsstelle verlängern durch ihre quer zur Längsrichtung stehenden Körperwand die auf der Oberfläche der Blattfedern verlaufenden Kriechstrecken zwischen den spannungsführenden Schleifleisten und Wippengelenken und erhöhen bereits dadurch die Isolationsfestigkeit der Blattfederoberflächen. Indem die Körperwand eines Isolationskörpers aufrecht auf der Oberfläche einer Blattfeder steht, können salzhaltige Tropfen oder Schichten von der Körperwand schwerkraftgetrieben ablaufen und vermindern dadurch die Ausbildung von über die Körperwand verlaufenden Kriechstrecken. Zusätzlich macht sich die Erfindung die Federbewegung der Blattfedern während der Fahrt zunutze, wobei die Schleifleisten relativ zum Wippengelenk mit etwa 8 Hz bis 12 Hz schwingen. Mit der Biegung der federnden Blattfeder ändert sich ein Winkel, den die Normalenvektoren an den unterschiedlichen Fixierungsstellen, an welchen die Körperwand des Isolationskörpers an der Oberfläche der Blattfeder gekoppelt ist, einschließen. Die Änderung dieses Winkels erzwingt wiederum eine flexurale Schwingungsbewegung der elastisch verformbaren Körperwand. Durch die Schwingungsbewegung der Körperwand wird die Anhaftung von Partikeln, Schmutztröpfchen und kondensierendem Dampf und so die Bildung leitfähiger Schichten auf dem Isolationskörper vermieden. Dadurch bleiben die Isolationskörper sauber und trocken genug, sodass sich darauf keine niederohmige Kriechstrecke ausbilden kann. Durch die hohe Kriechstromfestigkeit der mit erfindungsgemäßen Isolationskörpern versehenen Blattfedern kann der Stromabnehmer unter den typischen Umweltbedingungen des Straßenverkehrs zu jeder Jahreszeit mit hoher Verfügbarkeit eingesetzt zu werden.

Die Formgestaltung der Körperwand lässt eine Vielzahl an Gestaltungsmöglichkeiten für einen Isolationskörper zu, solang diese jeweils mindestens zwei Fixierungsstellen zur Kopplung mit der Blattfeder aufweist, um die flexuralen Körperschwingungen des Isolationskörpers zu erzwingen. Dabei schwingt die elastische Körperwand durch Verformung, beispielsweise durch Biegung, vorzugsweise mit einer transversalen Schwingungskomponente senkrecht zur Oberfläche der Körperwand. Der Isolationskörper kann beispielsweise hohl ausgebildet sein und seine Körperwand weist wenigstens zwei Schlitzöffnungen auf, durch welche die Blattfeder den Isolationskörper durchdringt. Die Schlitzöffnung kann dabei seitlich offen oder ganz geschlossen sein. Der Isolationskörper kann etwa als Hohlkugel oder als Hohlellipsoid ausgebildet sein. Er kann auch weitere Öffnungen aufweisen, ist aber topologisch einfach zusammenhängend. Der Isolationskörper kann insbesondere durch Aufrollen oder anderweitiges Verformen einer zuvor ebenen Körperwand gebildet werden, was fertigungstechnische Vorteile hat.

In einer vorteilhaften Ausführungsform des erfindungsgemäßen Stromabnehmers weist der Isolationskörper eine O-förmige Körperwand mit zwei fluchtenden Schlitzöffnungen auf, durch welche die wenigstens eine Blattfeder hindurchragt. Dabei liegen die Fixierungsstellen der Körperwand an den Schlitzöffnungen. Die beispielsweise hohlzylindrische, mit zwei Schlitzöffnungen versehene Körperwand wird derart von der Blattfeder durchdrungen, dass die Zylinderachse senkrecht oder im Wesentlichen senkrecht auf der Oberfläche der Blattfeder steht. Führt die Blattfeder eine Federbewegung aus, welche die Blattfeder bogenförmig krümmt, so werden die Körperwände an der bogenäußeren Oberseite der Fixierungsstellen voneinander weg gebogen bzw. auseinandergespreizt, während sie an der bogeninneren Unterseite der Fixierungsstellen aufeinander zu gebogen bzw. zusammengedrückt. Durch die Körperwand pflanzt sich diese Körperbewegung in Richtung der oberen und unteren Außenkante des Isolationskörpers derart fort, dass die zunächst kreisförmigen Außenkanten der Körperwand zu elliptischen Außenkanten verformt werden. Ist die Blattfeder konvex oder nach oben gekrümmt entsteht an der oberen Außenkante eine in Längsrichtung der Blattfeder gestreckte Ellipse und an der unteren Außenkante eine in Längsrichtung gestauchte Ellipse. Ist die Blattfeder konkav oder nach unten gekrümmt entsteht an der oberen Außenkante eine in Längsrichtung der Blattfeder gestauchte Ellipse und an der unteren Außenkante eine in Längsrichtung gestreckte Ellipse. So führt die Federbewegung der Blattfeder zu einer synchronen flexuralen Körperschwingung der Körperwand des Isolationskörpers, welche ein Anhaften leitfähiger Schichten auf der Oberfläche des Isolationskörpers verhindern.

In einer weiteren vorteilhaften Ausführungsform des erfindungsgemäßen Stromabnehmers weist der Isolationskörper eine S-förmige Körperwand mit drei fluchtenden Schlitzöffnungen auf, durch welche die wenigstens eine Blattfeder hindurchragt. Dabei liegen die Fixierungsstellen der Körperwand an den Schlitzöffnungen. Die S-förmige Körperwand kann nach Art eines Wellenvorhangs ausgebildet sein. In seiner kürzesten Form weist die Körperwand eine halbe Sinuswelle mit zwei fluchtenden Schlitzöffnungen, vorzugsweise aber eine volle Sinuswelle mit drei fluchtenden Schlitzöffnungen auf, durch die der Isolationskörper von der Blattfeder derart durchdrungen wird, dass sich die Wellenform der Körperwand in Längsrichtung der Blattfeder erstreckt. Führt die Blattfeder eine Federbewegung aus, welche die Blattfeder bogenförmig krümmt, so wird die Wellenform auf der bogenäußeren Oberseite der Blattfeder in deren Längsrichtung gestreckt, während sie auf der bogeninneren Unterseite der Blattfeder gestaucht wird. Verglichen mit der S-Form der oberen und unteren Außenkante der Körperwand bei nicht ausgelenkter Blattfeder werden Außenkanten in Längsrichtung der Blattfeder auf der Oberseite und Unterseite abwechselnd gestreckt und gestaucht. So führt die Federbewegung der Blattfeder zu einer synchronen flexuralen Körperschwingung der Körperwand des Isolationskörpers.

In einer weiteren vorteilhaften Ausführungsform des erfindungsgemäßen Stromabnehmers sind die Schlitzöffnungen geschlossen ausgebildet, so dass die Körperwand die wenigstens eine Blattfeder an den Fixierungsstellen jeweils ringsum umschließt. Bei geschlossenen Schlitzöffnungen ragt die Körperwand an einer Fixierungsstelle ringsum, also nach allen Seiten von der Oberfläche der Blattfeder ab. Dadurch werden Kriechstrecken an Oberseite, Unterseite und Seitenrändern einer Blattfeder verlängert, was die Isolationsfestigkeit der auf den Blattfedern angeordneten Isolationskörper erhöht.

In einer weiteren vorteilhaften Ausführungsform des erfindungsgemäßen Stromabnehmers ist die Körperwand an den Fixierungsstellen durch eine Klebstoffschicht mit der Oberfläche der wenigstens einen Blattfeder gekoppelt. Dies verhindert ein Unterkriechen der Isolationskörper, indem ein Eindringen von leitfähigen Ablagerungen in den Spalt zwischen Körperwand und Blattfederoberfläche verhindert wird, da diese Fuge durch den Klebstoff, beispielsweise einem Silikon, abgedichtet ist.

In einer weiteren vorteilhaften Ausführungsform des erfindungsgemäßen Stromabnehmers weist die Körperwand wenigstens abschnittsweise eine scharfe Außenkante auf. Die scharfe Außenkante begünstigt eine Teilung beziehungsweise Trennung einer sich im Bereich der Außenkante des Isolationskörpers anlagernden leitfähigen Schicht und verhindert dadurch besonders effektiv die Ausbildung eines sich über die Außenkante des Körperwand erstreckenden Kriechweges.

In einer weiteren vorteilhaften Ausführungsform des erfindungsgemäßen Stromabnehmers ist der Isolationskörper aus einem Silikon-Werkstoff, vorzugsweise aus Raum-Temperatur-Vernetzendem Silikon-Kautschuk, gefertigt. Dieses so genannte RTV-Silikon vernetzt vorteilhafterweise ohne den Einsatz hoher Temperaturen innerhalb einer spezifizierten Vulkanisationszeit. Hierdurch lassen sich erfindungsgemäße Isolationskörper schnell und effizient produzieren. Körperwände aus RTV-Silikon weisen eine limitierte Oberflächenbenetzung auf und begünstigen dadurch ein Abperlen und Abfließen von feuchten leitfähigen Ablagerungen.

Die Aufgabe wird ferner gelöst durch ein Straßenfahrzeug zum Betreiben an einer streckenseitig angeordneten, zweipoligen elektrischen Oberleitungsanlage, welches einen elektrischen Traktionsantrieb und einen Stromabnehmer nach einem der vorangehenden Ansprüche zur Einspeisung von elektrischer Traktionsenergie aus Fahrdrähten der Oberleitungsanlage umfasst.

Weitere Merkmale und Vorteile des erfindungsgemäßen Stromabnehmers ergeben sich aus nachfolgender Beschreibung anhand der Zeichnungen, in deren
- FIG 1: ein erfindungsgemäßes Straßenfahrzeug mit erfindungsgemäßem Stromabnehmer in einer Seitenansicht,
- FIG 2: das Straßenfahrzeug aus FIG 1 in einer Vorderansicht,
- FIG 3: eine linke Kontaktwippe eines erfindungsgemäßen Stromabnehmers in einer räumlichen Ansicht,
- FIG 4: die Kontaktwippe aus FIG 3 in einer Seitenansicht,
- FIG 5: die Kontaktwippe aus FIG 3 in einer Draufsicht,
- FIG 6: die Einzelheit VI aus FIG 5 in vergrößerter Darstellung,
- FIG 7: eine Blattfeder mit Isolationskörpern in einem ersten Ausführungsbeispiel,
- FIG 8: eine Blattfeder mit Isolationskörpern in einem zweiten Ausführungsbeispiel
- FIG 9: die Blattfeder mit Isolationskörper aus FIG 8 in Seitenansicht mit Darstellung eines Feder- bzw. Schwingungszustandes,
- FIG 10: die Blattfeder mit Isolationskörper aus FIG 8 in Draufsicht mit Darstellung eines Feder- bzw. Schwingungszustandes,
- FIG 11: die Einzelheit XI aus FIG 9 in vergrößerter Darstellung und
- FIG 12: die Einzelheit XII aus FIG 9 in vergrößerter Darstellung
schematisch veranschaulicht sind.

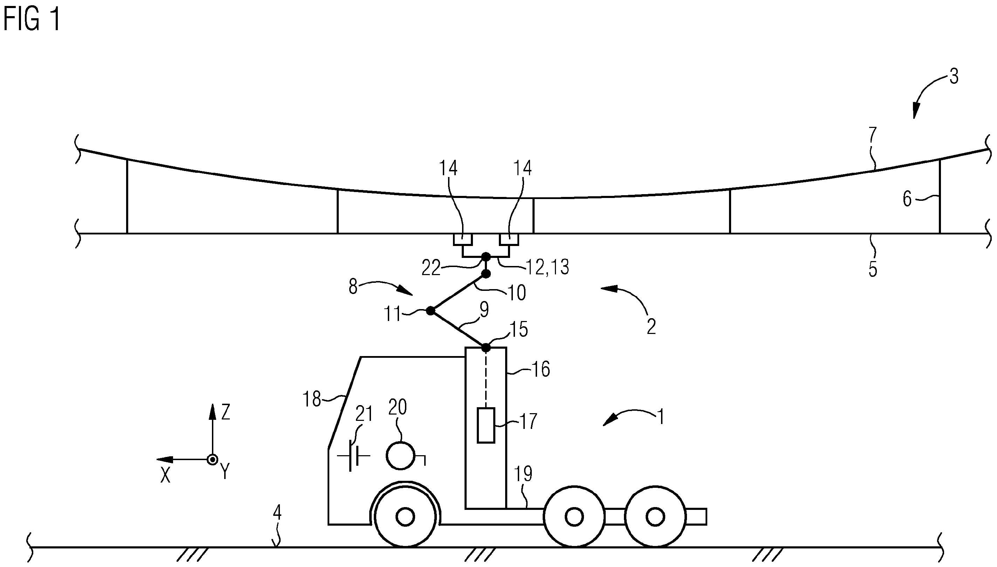

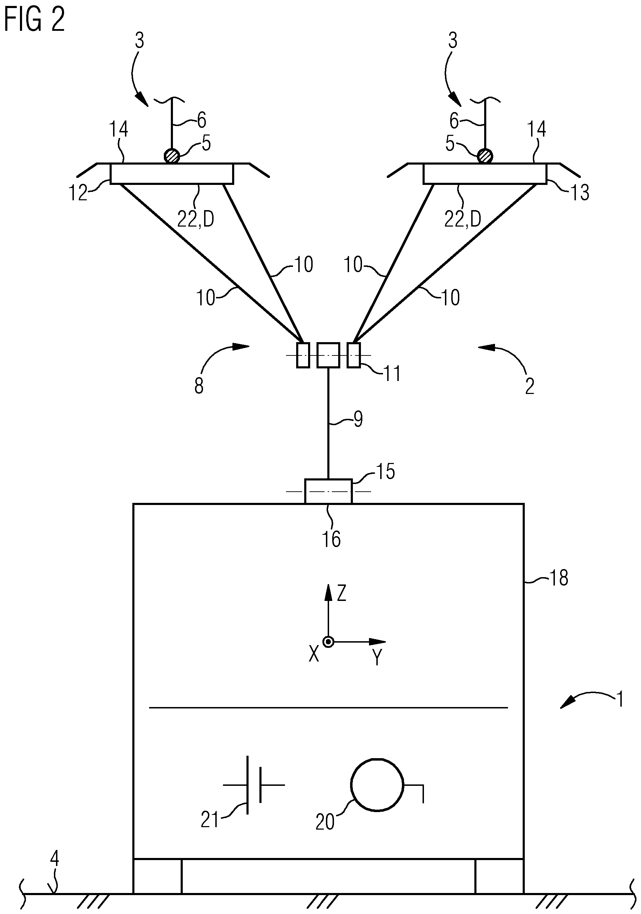

Gemäß FIG 1 und FIG 2 umfasst ein elektrisch oder hybrid-elektrisch angetriebenes Straßenfahrzeug 1, beispielsweise eine Sattelzugmaschine, einen Stromabnehmer 2, über den auch während der Fahrt elektrische Energie aus einer Oberleitungsanlage 3 in das Straßenfahrzeug 1 einspeisbar ist. Die Oberleitungsanlage 3 ist zweipolig ausgebildet und umfasst über einem Fahrstreifen 4 aufgespannt, je Kontaktpol einen Fahrdraht 5 zur Bereitstellung elektrischer Energie. Die als Hin- und Rückleiter ausgebildeten Fahrdrähte 5 sind jeweils über Hänger 6 an Tragseilen 7 aufgehangen und bilden zwei Längskettenwerke, die von nicht dargestellten Quertrageinrichtungen über dem Fahrstreifen 4 gehalten werden. Der dargestellte Stromabnehmer 2 ist als Halbscherenpantograph ausgebildet und umfasst ein gelenkiges Traggestänge 8 mit einem Unterarm 9 und zwei Oberarmen 10, die jeweils über ein Kniegelenk 11 unabhängig voneinander schwenkbar mit dem Unterarm 9 verbunden sind. Die Oberarme 10 tragen fahrdrahtseitig zwei nebeneinander angeordnete und über je ein Wippengelenk 22 gelagerte Kontaktwippen 12 und 13, nämlich in Fahrzeuglängsrichtung X gesehen eine rechte Kontaktwippe 12 und seitlich daneben angeordnet eine linke Kontaktwippe 13. Jede der Kontaktwippen 12 und 13 weist jeweils zwei Schleifleisten 14 auf, die parallel zu einer Drehachse D des jeweiligen Wippengelenks 22 und bezüglich der Fahrzeuglängsrichtung X hintereinander angeordnet sind. Zur Anlenkung des Stromabnehmers 2 an das Straßenfahrzeug 1 ist der Unterarm 9 fahrzeugseitig über ein Basisgelenk 15 mit dem Straßenfahrzeug 1 schwenkbar verbunden und stützt sich auf eine Gestängebasis 16 ab. Mit dem Traggestänge 8 ist eine Hubeinrichtung 17 so gekoppelt, dass die Kontaktwippen 12 und 13 anheb- und absenkbar sind. Die Hubeinrichtung 17 kann als Luftfederbalg ausgebildet sein, der bei Druckbeaufschlagung über geeignete mechanische Koppelmittel ein die Kontaktwippen 12 und 13 anhebendes Drehmoment im Basisgelenk 15 erzeugt.

In einer unteren Ruheposition der Kontaktwippen 12 und 13 ist das Traggestänge 8 des abgedrahteten Stromabnehmers 2 zusammengefaltet, so dass das Straßenfahrzeug 1 die für einen Betrieb außerhalb elektrifizierter Fahrstrecken einzuhaltenden, maximal zulässigen Fahrzeugabmessungen nicht überschreitet und der Stromabnehmer 2 sich in einem elektrisch gesicherten Zustand befindet. Zum Andrahten des Stromabnehmers 2 wird der Unterarm 9 aufgerichtet, wobei nicht dargestellte Zug- und Koppelstangen ein Aufrichten der Oberarme 10 erzwingen bis die Kontaktwippen 12 und 13 ihre in FIG 1 und FIG 2 dargestellte obere Kontaktposition erreicht haben, in der ein elektrischer Kontakt zwischen Schleifleisten 14 und Fahrdrähten 5 hergestellt ist. Hierfür ist es erforderlich, dass das Straßenfahrzeug 1 sich bezüglich der Fahrzeugquerrichtung Y hinreichend mittig im elektrifizierten Fahrstreifen 4 befindet, damit die Kontaktstellen der Fahrdrähte 5 innerhalb eines Arbeitsbereichs der Schleifleisten 14 zu liegen kommen.

Gemäß FIG 1 ist der Stromabnehmer 2 als Modul hinter einem Führerhaus 18 des Straßenfahrzeugs 1 angeordnet und stützt sich direkt oder indirekt auf einem Fahrzeuggestell 19 des Straßenfahrzeugs 1 ab. Das Straßenfahrzeug 1 umfasst einen elektrischen Traktionsantrieb 20, der während der Fahrt auf dem elektrifizierten Fahrstreifen 4 mittels des Stromabnehmers 2 aus der Oberleitungsanlage 3 mit Traktionsenergie versorgt werden kann. Abseits elektrifizierter Fahrstreifen 4 kann die Traktionsenergie durch einen fahrzeugseitigen Energiespeicher 21, der ebenfalls während der Fahrt auf einem elektrifizierten Fahrstreifen 4 mittels des Stromabnehmers 1 mit elektrischer Energie aus der Oberleitungsanlage 3 aufgeladen werden kann, oder durch einen nicht dargestellten Dieselgenerator bereitgestellt werden.

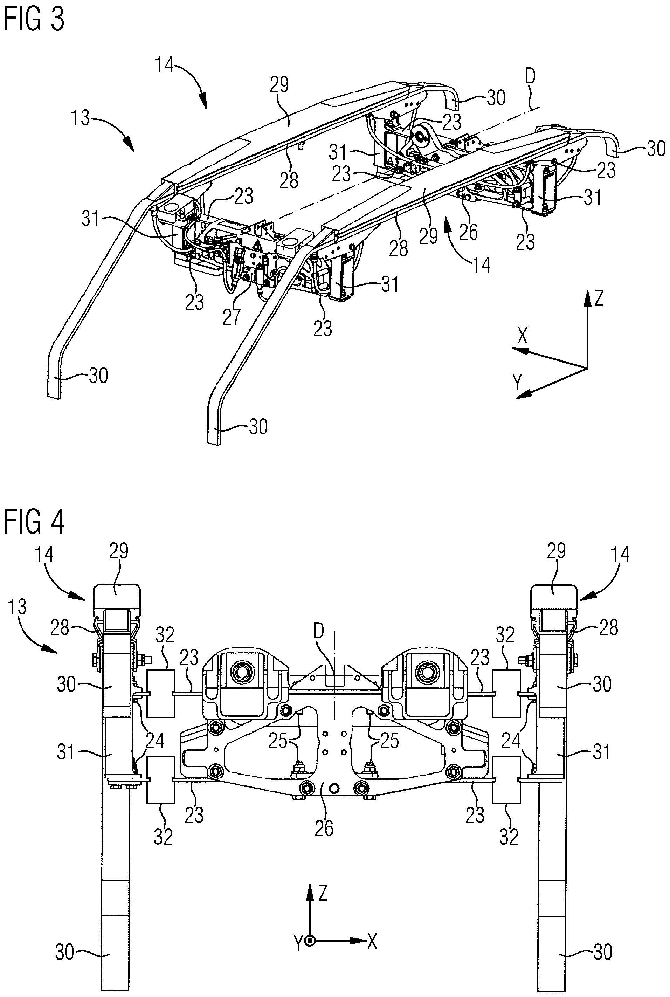

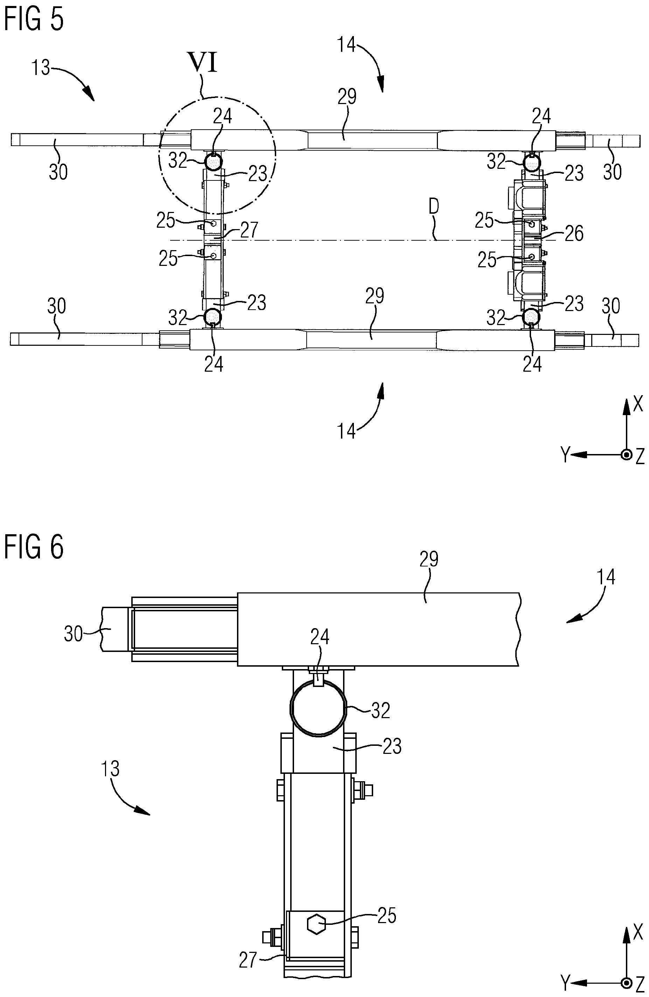

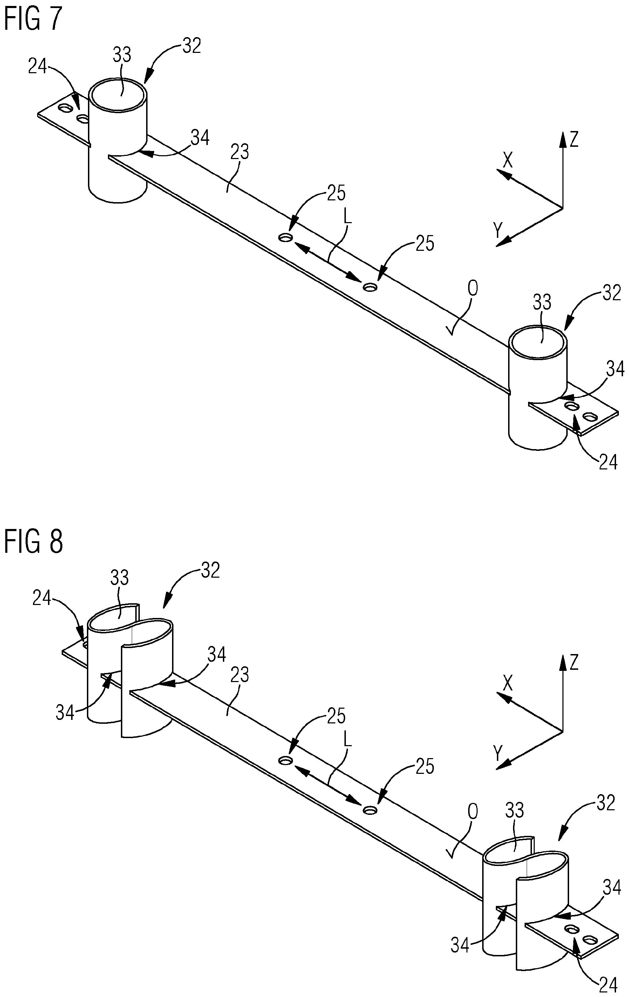

Gemäß FIG 3 bis FIG 6, in welchen exemplarisch die in Fahrzeuglängsrichtung X gesehen linke Kontaktwippe 13 näher dargestellt ist, stützen sich die zwei Schleifleisten 14, die sich parallel zur Drehachse D des Wippengelenks 22 erstrecken, auf dem Wippengelenk 22 jeweils über vier Blattfedern 23 federelastisch ab. In FIG 3 bis FIG 6 sind Wippengelenk 22 und Traggestänge 8 zur besseren Übersichtlichkeit nicht dargestellt. Im dargestellten Ausführungsbeispiel sind vier von einer vorderen Schleifleiste 14 bis zu einer hinteren Schleifleiste 14 durchgehende Blattfedern 23 vorgesehen, die - wie insbesondere auch in FIG 7 und FIG 8 ersichtlich ist - jeweils einen rechteckförmigen, flachen Querschnitt aufweisen. Jede Blattfeder 23 weist erste Befestigungsstellen 24, an der sie mit jeweils einer der Schleifleisten 14 verbunden bzw. daran befestigt ist, und zweite Befestigungsstellen 25, an der sie mit dem Wippengelenk 22 verbunden bzw. daran befestigt ist, auf. Es können alternativ auch acht Blattfedern vorgesehen sein, welche dann jeweils eine erste Befestigungsstelle 24 und eine zweite Befestigungsstelle 25 zur Verbindung mit Schleifleisten 14 bzw. Wippengelenk 22 aufweisen. Im dargestellten Fall durchgehender Blattfedern 23 sind jeweils zwei in Fahrzeughochrichtung Z gesehen übereinander angeordnet, wobei ein Paar Blattfedern 23 durch einen inneren Wippenkasten 26 und das andere Paar Blattfedern 23 durch einen äußeren Wippenkasten 27 verläuft. Die beiden Wippenkästen 26 und 27 sind durch das nicht dargestellte Wippengelenk 22 miteinander verbunden und stellen jeweils vier zweite Befestigungsstellen 25 für die Blattfedern 23 bereit. Jede Schleifleiste 14 umfasst ein in einem Schleifstückhalter 28 befestigtes Schleifstück 29, vorzugsweise aus Graphit, sowie nach unten gebogene Endhörner 30. An den Enden jedes Schleifstückhalters 28 sind zwei Schleifleistenhalter 31 befestigt, welche jeweils die ersten Befestigungsstellen 24 für zwei der Blattfedern 23 bereitstellen.

Die Blattfedern 23 sind zur Potenzialtrennung zwischen einem elektrischen Oberleitungspotenzial, auf dem die Schleifleisten 14 bei elektrischer Kontaktierung der Fahrdrähte 5 liegen, und einem elektrischen Fahrzeugpotenzial, auf dem das Traggestänge 8 liegt, elektrisch isolierend ausgebildet. Die Blattfedern 23 weisen erfindungsgemäß mindestens einen schwingungsfähigen Isolationskörper 32 mit einer elastisch verformbaren Körperwand 33 auf, welche aufrecht auf einer Oberfläche O der Blattfeder 23 und quer zu einer Längsrichtung L der der Blattfeder 23 steht. Die Körperwand 33 ist dabei über mindestens zwei Fixierungsstellen 34 derart mit der Blattfeder 23 gekoppelt, dass eine Federbewegung F der Blattfeder 23 eine flexurale Schwingungsbewegung S der Körperwand 32 erzwingt. Die Längsrichtung L weist dabei von einer ersten Befestigungsstelle 24 der Blattfeder 23, an der sie mit einer Schleifleiste 14 verbunden ist, zu einer zweiten Befestigungsstelle 25 der Blattfeder 23, an der sie mit einem Wippengelenk 22 verbunden ist.

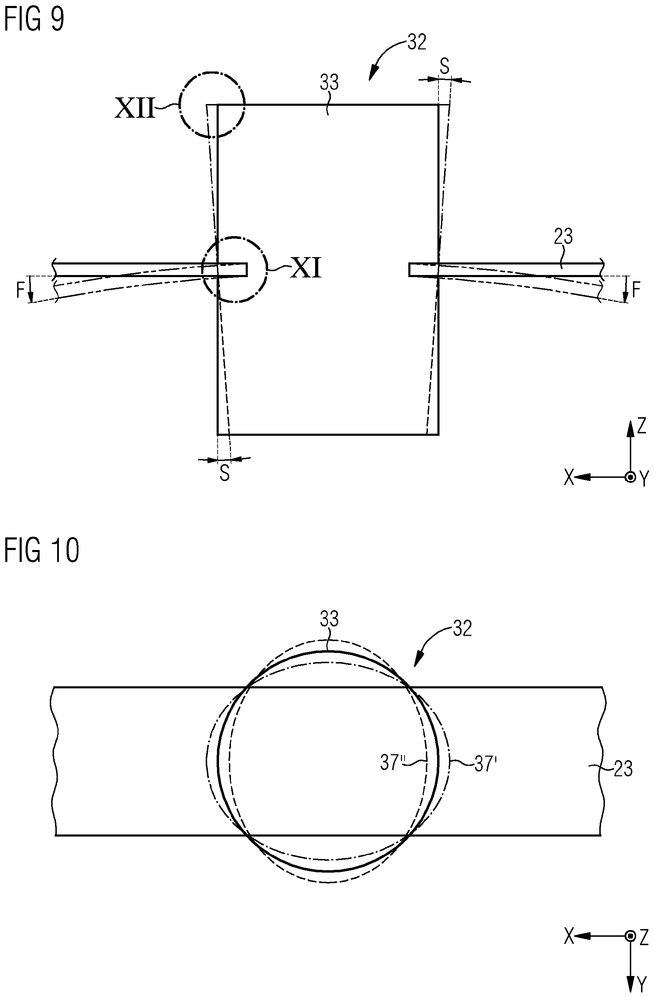

Gemäß FIG 7 und FIG 8 ist die Körperwand 33 dabei über mindestens zwei Fixierungsstellen 34 derart mit der wenigstens einen Blattfeder 23 gekoppelt, dass - unter Bezugnahme auf FIG 9 und Fig 10 - eine Federbewegung F der Blattfeder 23 eine flexurale Schwingungsbewegung S der Körperwand 33 erzwingt. Die Anordnung der Isolationskörper 32 zwischen erster und zweiter Befestigungsstelle 34 verlängern durch ihre quer zur Längsrichtung L stehenden Körperwand 33 die auf der Oberfläche O der Blattfedern 23 verlaufenden Kriechstrecken zwischen spannungsführenden Schleifleisten 14 und Wippengelenken 22 und erhöhen bereits dadurch die Isolationsfestigkeit der Blattfederoberflächen O. Indem die Körperwand 33 eines Isolationskörpers 32 aufrecht auf der Oberfläche O einer Blattfeder 23 steht, können salzhaltige Tropfen oder Schichten von der Körperwand 33 schwerkraftgetrieben ablaufen und vermindern dadurch die Ausbildung von über die Körperwand 33 verlaufenden Kriechstrecken. Zusätzlich macht sich die Erfindung die Federbewegung F der Blattfedern 23 während der Fahrt zunutze, wobei die Schleifleisten 14 relativ zum Wippengelenk 22 mit etwa 8 Hz bis 12 Hz schwingen.

Mit der Biegung der federnden Blattfeder 23 ändert sich der Winkel, den die Normalenvektoren an den unterschiedlichen Fixierungsstellen 34, an welchen die Körperwand 33 des Isolationskörpers 32 an der Oberfläche O der Blattfeder 23 gekoppelt ist, einschließen. Die Änderung dieses Winkels erzwingt wiederum eine flexurale Schwingungsbewegung S der elastisch verformbaren Körperwand 33. Durch die Schwingungsbewegung S der Körperwand wird die Anhaftung von Partikeln, Schmutztröpfchen und kondensierendem Dampf und so die Bildung leitfähiger Schichten auf dem Isolationskörper 32 vermieden. Dadurch bleiben die Isolationskörper 32 sauber und trocken genug, sodass sich darauf keine niederohmige Kriechstrecke ausbilden kann. Durch die hohe Kriechstromfestigkeit der mit erfindungsgemäßen Isolationskörpern 32 versehenen Blattfedern 23 kann der Stromabnehmer 2 unter den typischen Umweltbedingungen des Straßenverkehrs zu jeder Jahreszeit mit hoher Verfügbarkeit eingesetzt zu werden.

Gemäß FIG 4 bis FIG 7 und FIG 9 bis FIG 12 weist der Isolationskörper 32 eine O-förmige Körperwand 33 mit zwei fluchtenden Schlitzöffnungen 35 auf, durch welche die wenigstens eine Blattfeder 23 hindurchragt. Dabei liegen die Fixierungsstellen 34 der Körperwand 33 an den Schlitzöffnungen 35. Die beispielsweise hohlzylindrische, mit zwei Schlitzöffnungen 35 versehene Körperwand 33 wird derart von der Blattfeder 23 durchdrungen, dass die Zylinderachse senkrecht oder im Wesentlichen senkrecht auf der Oberfläche O der Blattfeder 23 steht. Führt die Blattfeder 23 gemäß FIG 9 und FIG 10 eine Federbewegung F aus, welche die Blattfeder 23 bogenförmig krümmt, so werden die Körperwände 33 an der bogenäußeren Oberseite der Fixierungsstellen 34 voneinander weg gebogen bzw. auseinandergespreizt, während sie an der bogeninneren Unterseite der Fixierungsstellen 34 aufeinander zu gebogen bzw. zusammengedrückt werden. Durch die Körperwand 33 pflanzt sich diese Körperbewegung S in Richtung der oberen Außenkante 37' und unteren Außenkante 37" des Isolationskörpers 32 derart fort, dass die zunächst kreisförmigen Außenkanten 37 der Körperwand 33 elliptisch deformiert werden. Ist die Blattfeder 23 konvex oder nach oben gekrümmt, entsteht an der oberen Außenkante 37' eine in Längsrichtung L der Blattfeder 23 gestreckte Ellipse und an der unteren Außenkante 37" eine in Längsrichtung gestauchte Ellipse. Ist die Blattfeder 23 konkav oder nach unten gekrümmt, entsteht an der oberen Außenkante 37' eine in Längsrichtung L der Blattfeder 23 gestauchte Ellipse und an der unteren Außenkante 37" eine in Längsrichtung L gestreckte Ellipse. So führt die Federbewegung F der Blattfeder 23 zu einer synchronen flexuralen Körperschwingung S der Körperwand 33 des Isolationskörpers 32, welche ein Anhaften leitfähiger Schichten auf der Oberfläche des Isolationskörpers 32 verhindern. Gemäß FIG 8 kann der Isolationskörper 32 - neben einer Vielzahl an weiteren denkbaren Formgestaltungen - eine S-förmige Körperwand 33 mit drei fluchtenden Schlitzöffnungen 35 aufweisen, durch welche die jeweilige Blattfeder 23 hindurchragt. Dabei liegen die Fixierungsstellen 34 der Körperwand 33 an den Schlitzöffnungen 35. Die S-förmige Körperwand 33 ist nach Art eines Wellenvorhangs ausgebildet und weist eine volle Sinuswelle mit drei fluchtenden Schlitzöffnungen 35 auf, durch die der Isolationskörper 32 von der Blattfeder 23 derart durchdrungen wird, dass sich die Wellenform der Körperwand 33 in Längsrichtung L der Blattfeder 23 erstreckt. Führt die Blattfeder 23 eine Federbewegung aus, welche die Blattfeder 23 bogenförmig krümmt, so wird die Wellenform auf der bogenäußeren Oberseite der Blattfeder 23 in deren Längsrichtung L gestreckt, während sie auf der bogeninneren Unterseite der Blattfeder 23 gestaucht wird. Verglichen mit der S-Form der oberen und unteren Außenkante 37 der Körperwand 33 bei nicht ausgelenkter Blattfeder 23 werden Außenkanten 37 in Längsrichtung L der Blattfeder 23 auf der Oberseite und Unterseite abwechselnd gestreckt und gestaucht. So führt die Federbewegung der Blattfeder 23 zu einer synchronen flexuralen Körperschwingung der Körperwand 33 des Isolationskörpers 32.

Die Schlitzöffnungen 35 sind gemäß FIG 7 und FIG 8 geschlossen ausgebildet, so dass die Körperwand 33 die wenigstens eine Blattfeder 23 an den Fixierungsstellen 34 jeweils ringsum umschließt. Bei geschlossenen Schlitzöffnungen 35 steht die Körperwand 33 an einer Fixierungsstelle 34 ringsum, also nach allen Seiten von der Oberfläche O der Blattfeder 23 ab. Dadurch werden Kriechstrecken an Oberseite, Unterseite und Seitenrändern einer Blattfeder 23 verlängert, was die Isolationsfestigkeit der auf den Blattfedern 23 angeordneten Isolationskörper 32 erhöht.

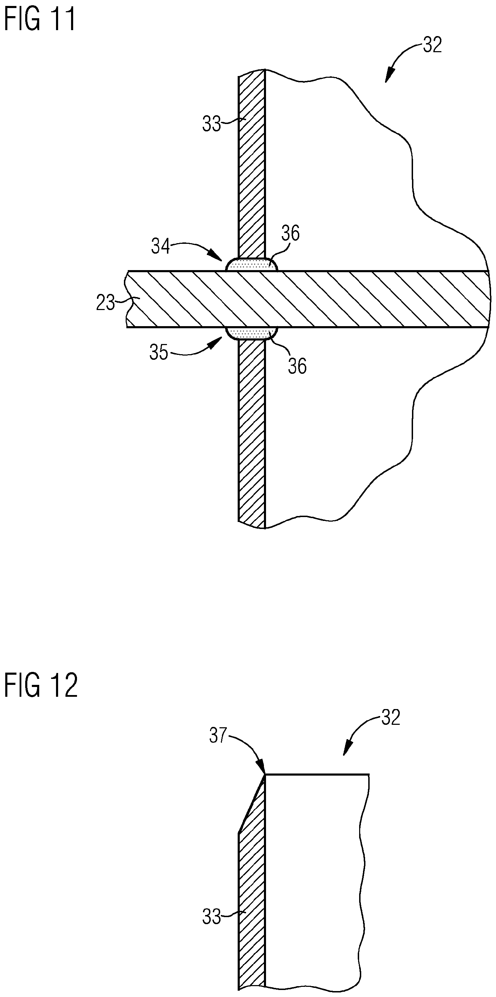

Die Körperwand 33 ist gemäß FIG 11 an den Fixierungsstellen 34 durch eine Klebstoffschicht 36 mit der Oberfläche O der wenigstens einen Blattfeder 23 gekoppelt. Dies verhindert ein Unterkriechen der Isolationskörper 32, indem ein Eindringen von leitfähigen Ablagerungen in den Spalt zwischen Körperwand 33 und Blattfederoberfläche O verhindert wird, da diese Fuge durch den Klebstoff, beispielsweise einem Silikon, abgedichtet ist.

Die Körperwand 33 weist gemäß FIG 12 eine scharfe Außenkante 37 auf. Die scharfe Außenkante 37 begünstigt eine Teilung beziehungsweise Trennung einer sich im Bereich der Außenkante 37 des Isolationskörpers 32 anlagernden leitfähigen Schicht und verhindert dadurch besonders effektiv die Ausbildung eines sich über die Außenkante 37 des Körperwand 33 erstreckenden Kriechweges.

Der Isolationskörper 32 ist aus einem Silikon-Werkstoff, vorzugsweise aus Raum-Temperatur-Vernetzendem Silikon-Kautschuk, gefertigt. Dieses so genannte RTV-Silikon vernetzt vorteilhafterweise ohne den Einsatz hoher Temperaturen innerhalb einer spezifizierten Vulkanisationszeit. Hierdurch lassen sich erfindungsgemäße Isolationskörper 32 schnell und effizient produzieren. Körperwände aus RTV-Silikon weisen eine limitierte Oberflächenbenetzung auf und begünstigen dadurch ein Abperlen und Abfließen von feuchten leitfähigen Ablagerungen.

## Patentansprüche

1. Stromabnehmer (2) für ein elektrisch oder hybridelektrisch angetriebenes Straßenfahrzeug (1) zur Einspeisung von elektrischer Traktionsenergie aus Fahrdrähten (5) einer streckenseitig angeordneten, zweipoligen elektrischen Oberleitungsanlage (3), umfassend
- ein gelenkiges Traggestänge (8), welches fahrzeugseitig über ein Basisgelenk (15) drehbar auf dem Straßenfahrzeug (1) abstützbar ist und welches fahrdrahtseitig zwei über je ein Wippengelenk (22) drehbar gelagerte Kontaktwippen (12, 13) trägt,
- wobei jede der Kontaktwippen (12, 13) jeweils zwei sich parallel zu einer Drehachse (D) des jeweiligen Wippengelenks (22) erstreckende Schleifleisten (14) aufweist, welche sich auf dem jeweiligen Wippengelenk (22) über Blattfedern (23) federelastisch abstützen, und
- eine Hubeinrichtung (17) zum Aufstellen des Traggestänges (8) aus einer unteren Ruheposition, in der die Kontaktwippen (12, 13) fahrzeugnah abgesenkt sind, in eine obere Betriebsposition, in der die Kontaktwippen (12, 13) zur elektrischen Kontaktherstellung der Schleifleisten (14) mit den Fahrdrähten (5) angehoben sind,
- wobei die Blattfedern (23) zur Potenzialtrennung zwischen einem elektrischen Oberleitungspotenzial, auf dem die Schleifleisten (14) bei elektrischer Kontaktierung der Fahrdrähte (5) liegen, und einem elektrischen Fahrzeugpotenzial, auf dem das Traggestänge (8) liegt, elektrisch isolierend ausgebildet sind,
**dadurch gekennzeichnet,**
- **dass** wenigstens eine Blattfeder (23) einen schwingungsfähigen Isolationskörper (32) mit einer elastisch verformbaren Körperwand (33) aufweist, welche aufrecht auf einer Oberfläche (O) der wenigstens einen Blattfeder (23) und quer zu einer Längsrichtung (L) der wenigstens einen Blattfeder (23) steht,
- wobei die Körperwand (33) über mindestens zwei Fixierungsstellen (34) derart mit der wenigstens einen Blattfeder (23) gekoppelt ist, dass eine Federbewegung (F) der Blattfeder (23) eine flexurale Schwingungsbewegung (S) der Körperwand (33) erzwingt, und
- wobei die Längsrichtung (L) von einer ersten Befestigungsstelle (24) der wenigstens einen Blattfeder (23), an der sie mit einer Schleifleiste (14) verbunden ist, zu einer zweiten Befestigungsstelle (25) der wenigstens einen Blattfeder (23), an der sie mit einem Wippengelenk (22) verbunden ist, weist.

2. Stromabnehmer (2) nach Anspruch 1,
- wobei der Isolationskörper (32) eine O-förmige Körperwand (33) mit zwei fluchtenden Schlitzöffnungen (35) aufweist, durch welche die wenigstens eine Blattfeder (23) hindurchragt, und
- wobei die Fixierungsstellen (34) der Körperwand (33) an den Schlitzöffnungen (35) liegen.

3. Stromabnehmer (2) nach Anspruch 1,
- wobei der Isolationskörper (32) eine S-förmige Körperwand (33) mit drei fluchtenden Schlitzöffnungen (35) aufweist, durch welche die wenigstens eine Blattfeder (23) hindurchragt, und
- wobei die Fixierungsstellen (34) der Körperwand (33) an den Schlitzöffnungen (35) liegen.

4. Stromabnehmer (2) nach einem der vorangehenden Ansprüche,
- wobei die Schlitzöffnungen (35) geschlossen ausgebildet sind und die Körperwand (33) an den Fixierungsstellen (34) die wenigstens eine Blattfeder (23) jeweils ringsum umschließt.

5. Stromabnehmer (2) nach einem der vorangehenden Ansprüche,
- wobei die Körperwand (33) an den Fixierungsstellen (34) durch eine Klebstoffschicht (36) mit der Oberfläche (O) der wenigstens einen Blattfeder (23) gekoppelt ist.

6. Stromabnehmer (2) nach einem der vorangehenden Ansprüche,
- wobei die Körperwand (33) wenigstens abschnittsweise eine scharfe Außenkante (37) aufweist.

7. Stromabnehmer (2) nach einem der Ansprüche 2 bis 6,
- wobei der Isolationskörper (32) aus einem Silikon-Werkstoff, vorzugsweise aus RaumTemperatur-Vernetzendem Silikon-Kautschuk, gefertigt ist.

8. Straßenfahrzeug (1) zum Betreiben an einer streckenseitig angeordneten, zweipoligen, elektrischen Oberleitungsanlage (3), umfassend
- einen elektrischen Traktionsantrieb (20) und
- einen Stromabnehmer (2) nach einem der vorangehenden Ansprüche zur Einspeisung von elektrischer Traktionsenergie aus Fahrdrähten (5) der Oberleitungsanlage (3).
